Europäisches Patentamt

European Patent Office

Office européen des brevets

(19)

(11) Numéro de publication: **0 005 673**

**A2**

(12) # DEMANDE DE BREVET EUROPEEN

(21) Numéro de dépôt: **79400310.3**

(22) Date de dépôt: **16.05.79**

(51) Int. Cl.²: **F 24 J 3/02**

(30) Priorité: **22.05.78 FR 7815665**

(43) Date de publication de la demande:
**28.11.79 Bulletin 79/24**

(84) Etats Contractants Désignés:
**AT BE DE GB IT NL**

(71) Demandeur: **Vironneau, Pierre René**
**Chemin des Palanques**
**F-31120 Portet-Sur-Garonne(FR)**

(72) Inventeur: **Vironneau, Pierre René**
**Chemin des Palanques**
**F-31120 Portet-Sur-Garonne(FR)**

(74) Mandataire: **Fruchard, Guy et al,**
**CABINET CHEREAU Maximilianstrasse 15**
**D-8000 München 22(DE)**

(54) **Substrat métallique multicouches absorbeur des radiations solaires et procédé de réalisation d'un tel substrat.**

(57) L'invention concerne un procédé de revêtement permettant d'obtenir un substrat métallique absorbeur de l'énergie solaire.

Ce procédé consiste à disposer une interface réfléchissante entre deux couches successives de métal. Les caractéristiques spectroscopiques de chacun de ces métaux sont telles que la première couche de métal déposé soit moins perméable aux rayonnements infra-rouges que la couche venant la recouvrir, de sorte que la surface interne de cette dernière constitue un réflecteur parfait aux rayonnements réémis par le fluide caloporteur circulant sous un tel substrat.

Fig. I

EP 0 005 673 A2

*I.*

La présente invention qui se situe dans le domaine de la captation de l'énergie solaire concerne un procédé de revêtement permettant de réaliser un substrat métallique très absorbant des radiations solaires.

Les capteurs solaires actuellement connus sont conçus pour absorber le plus possible d'énergie irradiée, et ce, en recouvrant généralement le corps absorbeur sous lequel circule un fluide caloporteur d'une substance non incandescente qui, en s'échauffant sous l'effet des rayonnements solaires, n'émet que des radiations infrarouges dans un spectre de plus grande longueur d'onde que celui du spectre solaire.

Une partie de ces radiations émises va se perdre dans le milieu extérieur par convection avec l'air. Aussi, afin de restreindre cette perte d'énergie, il a été judicieusement imaginé de créer un barrage thermique à ces radiations infra-rouges en adoptant le principe de l'effet de serre. Ce dernier consiste à emprisonner entre le corps absorbeur et un corps isolant, mais transparent aux radiations solaires de petite longueur d'onde, un volume de fluide, tel que de l'air, qui, sous l'effet des rayonnements infra-rouges, émis par la susdite substance non incandescente, va engendrer des courants de convection entre ces deux corps et une grande partie de l'énergie rayonnée sera de nouveau absorbée par la substance recouvrant le corps absorbeur. Ainsi, les rayonnements calorifiques émis par le corps absorbeur ne seront pas dissipés dans le milieu ambiant.

L'autre partie des radiations émises par cette substance est recueillie et emmagasinée par convection grâce à un fluide caloporteur circulant sous le corps absorbeur dans une canalisation ou un autre moyen équivalent protégé thermiquement par un matériau isolant.

Or, ce fluide caloporteur en s'échauffant entraîne une propagation de la chaleur par conduction à travers l'épaisseur du corps absorbeur, ce qui augmente les pertes d'énergie calorifique et remet en cause le rapport absorption sur émission de l'énergie reçue par la substance recouvrant le corps absorbeur, rapport dont la grandeur algébrique élevée détermine l'efficacité de captation de l'énergie solaire.

La présente invention permet de remédier à ces inconvénients et assure à l'ensemble du capteur un rendement énergétique performant. Pour cela, elle limite la propagation de la chaleur à travers le corps absorbeur développée par l'élévation de température du fluide de caloporteur, en réalisant entre deux couches successives de métal déposées sur la face du corps absorbeur exposée aux rayonnements solaires, un nouveau barrage thermique fonctionnant uniquement dans le sens des radiations allant du fluide caloporteur vers le corps absorbeur.

A cet effet, le procédé de revêtement, objet de l'invention, consiste à disposer une interface réfléchissante entre deux couches successives de métal, la première couche de métal déposée étant plus perméable aux radiations infra-rouges que celle du métal venant la recouvrir, de sorte que la face interne de cette dernière définisse un réflecteur parfait aux rayonnements de grande longueur d'onde émis par le fluide caloporteur.

Ce procédé de revêtement permettant de réaliser un plan réfléchissant comprend les étapes suivantes.

Dans un premier temps, l'opération consiste à préparer l'une des faces du substrat de base, découpé par exemple dans un matériau en acier inoxydable, pour recevoir les deux couches successives de métal. Cette préparation consiste d'une part en des opérations préliminaires de nettoyage, de dégraissage et de décapage du substrat, et d'autre part, en une mise en condition permettant d'effectuer ces dépôts métalliques grâce à un revêtement électrochimique de Nickel d'accrochage.

Dans un deuxième temps, une couche de Nickel nivelé est déposée par voie électrolytique, de manière à obtenir un état de surface exempt de porosités.

Dans un troisième temps, la surface du substrat étant parfaitement lisse, une fine couche de métal constituée par du Zinc ou par du Cadmium est déposée par électroplaquage sur la surface du Nickel nivelé. La structure moléculaire du métal ainsi déposé présente des caractéristiques particulièrement intéressantes car :

- d'une part, l'ordonnancement des grains de métal dont la structure cristalline est la plus compacte possible confère à cette couche un éclat métallique interne important déterminant le pouvoir réfléchissant recherché ;

- d'autre part, l'état de la couche électronique externe des atomes de ce métal détermine le coefficient de conductivité thermique de celui-ci.

Il est ainsi avantageux de choisir un métal tel que du Cadmium, du Zinc ou un autre métal présentant une structure spectroscopique à peu près identique qui soit moins perméable que le Nickel aux rayonnements infra-rouges émis par les atomes des couches précédentes.

Dans un quatrième et dernier temps, deux possibilités sont offertes. On opère :

- soit une oxydation superficielle du dernier métal déposé par voie chimique ou par voie électrochimique ;

- soit un dépôt électrolytique d'un métal très absorbant des rayonnements solaires et par exemple du Nickel noir.

Cette dernière opération est délicate car selon les données paramétriques des bains d'oxydation ou de dépôt et notamment des densités de courant, des temps d'immersion et des électrolytes, on obtient une épaisseur d'oxyde de métal ou d'un autre métal dont la grandeur algébrique doit déterminer d'une part, un rapport équilibré absorption sur émission et d'autre part, une coloration de l'état de surface qui peut prendre chacune des longueurs d'onde du spectre visible.

Bien évidemment, le nombre d'interfaces réfléchissantes n'est pas limité à l'unité et il sera possible tout en restant dans l'esprit de l'invention de concevoir plusieurs réflecteurs à l'intérieur d'un même substrat.

L'invention sera mieux comprise à la lecture de la description d'un exemple de réalisation d'un substrat métallique conforme à l'invention, donné à titre explicatif et non limitatif en regard des dessins annexés sur lesquels :

- la figure 1 est une vue en coupe d'un tel substrat;

- la figure 2 est une vue schématique montrant les échanges d'énergie s'opérant au travers de ce substrat.

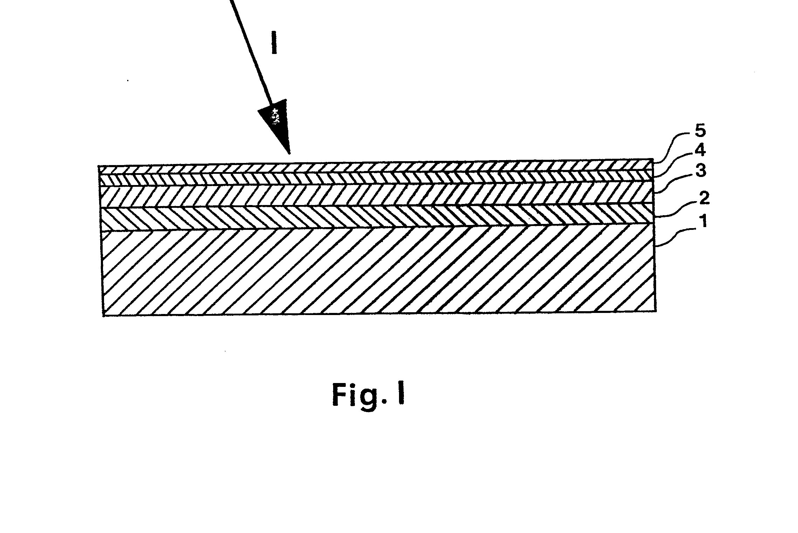

En se rapportant à la figure 1, illustrant un substrat multicouches réalisé selon le procédé décrit au début du présent mémoire, on reconnaît :

- en 1, le substrat de base en acier inoxydable ;
- en 2, la couche de Nickel d'accrochage;
- en 3, la couche de Nickel nivelé;
- en 4, une couche de Cadmium nivelé;
- en 5, une couche d'oxyde de Cadmium.

Lorsqu'un rayonnement solaire I de longueur d'onde $\lambda_1$ du spectre visible et infra-rouge proche est reçu par un tel substrat, la première couche 5 d'oxyde de métal transforme l'énergie reçue en une énergie dans le spectre infra-rouge lointain de plus grande longueur d'onde $\lambda_2$. En effet, lorque les électrons des couches électroniques périphériques des atomes de métal et notamment dans cet exemple, d'oxyde de Cadmium, reçoivent une énergie $\Delta w_1$ sous forme d'ondes électromagnétiques de longueur $\lambda_1$, ils passent de leur état fondamental de stabilité à un état excité sans dégradation interne de la matière ; on dit alors que les atomes ont absorbé une énergie $\Delta w_1 = \frac{K}{\lambda_1}$ ou K est une constante, fonction de la nature de la matière employée. Cependant, ces électrons à l'état excité ne sont pas stables et reviennent à leur état fondamental en émettant une énergie $\Delta w_2$ nettement inférieure à $\Delta w_1$ car elle est diffusée à travers tous les atomes de Cadmium et se présente sous la forme $\Delta w_2 = \frac{K}{\lambda_2}$. Comme l'énergie $\Delta w_2$ est de valeur nettement moindre que l'énergie $\Delta w_1$ et que K reste constant pour le Cadmium, ce dernier va donc émettre une énergie sous forme de rayonnements de longueur d'onde $\lambda_2$ plus grande que celle des rayonnements émis par le Soleil.

En effet, $\Delta w_2 < \Delta w_1$ où $\Delta w_1 = \frac{K}{\lambda_1}$ et $\Delta w_2 = \frac{K}{\lambda_2}$ donc $\frac{K}{\lambda_2} < \frac{K}{\lambda_1}$ où K = Cste, ainsi $\lambda_1 > \lambda_2$.

La couche d'oxyde de Cadmium 5 va donc émettre une première partie de l'énergie reçue vers le corps transparent devenu partiellement isolant aux longueurs d'onde de l'infra-rouge lointain, celle-ci sera donc piégée par l'effet de serre et une deuxième partie est transmise par conduction à travers les couches 4, 3, 2 et 1 puis par convection à un fluide caloporteur circulant sous le substrat 1.

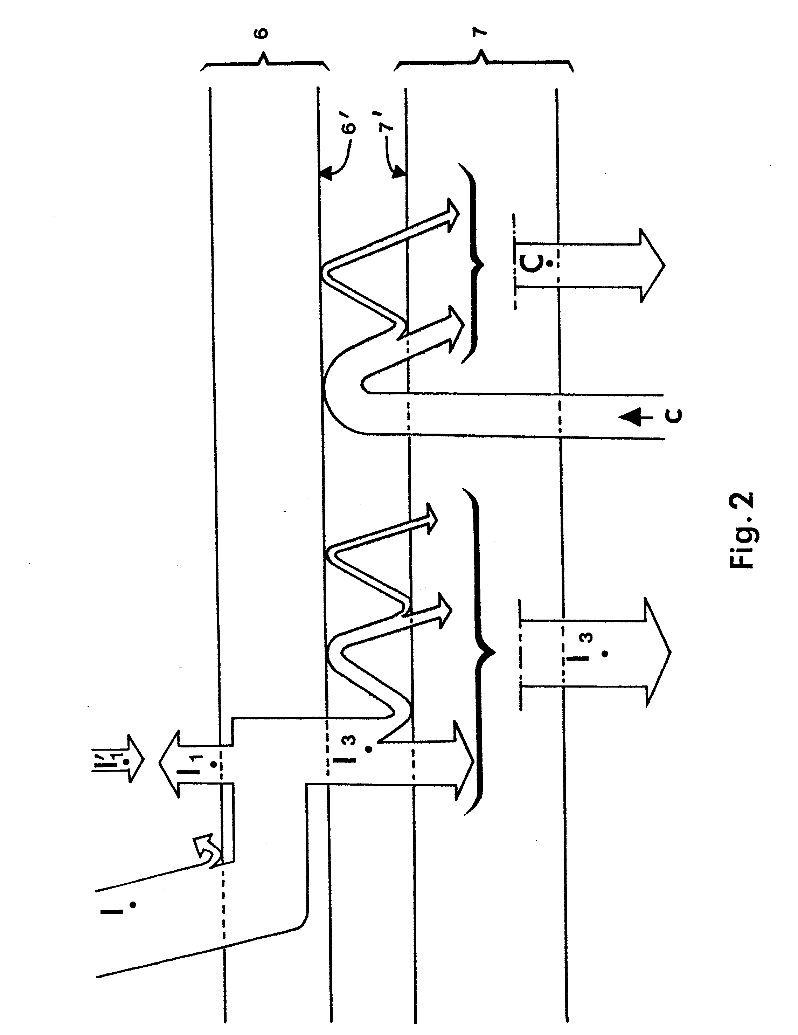

La figure 2 illustre schématiquement les échanges d'énergie s'effectuant par rayonnements à travers un corps absorbeur réalisé selon le substrat métallique multicouches décrit ci-dessus.

Afin de limiter la complexité d'une analyse complète et de mieux mettre en évidence l'objet essentiel de l'invention, les couches 4 et 5 sont réunies en une seule couche 6 et les cou-ches 1, 2 et 3 en une seule couche 7 puisque les phénomènes de conduction à l'intérieur de celles-ci sont simples et évidents pour l'homme de l'art. De plus, l'espace entre ces couches 6 et 7, assimilable à l'espace compris entre les couches 4 et 3, a été volontairement agrandi pour mieux illustrer les phénomènes de réflexion qui s'y passent à l'échelle quantique.

Sur ce dessin on observera que pour un rayonnement incident I venant frapper la couche absorbante 6 celle-ci absorbe la quasi totalité de l'énergie reçue. Une partie de cette énergie $I_1$ est réémise vers le corps transparent qui grâce à l'effet de serre en retourne une grande proportion $I'_1$ vers la couche absor-bante 6. L'autre partie de cette énergie $I_1$ et l'énergie $I'_1$ ré-fléchie par le corps transparent créent une énergie globale $I_3$ rayonnée sur la surface 7' du corps 7. Ce corps 7 en absorbe une grande partie et réfléchit la partie restante sur la surface 6' du corps 6 lequel, non transparent aux rayonnements de grande longueur d'onde, réfléchit la totalité du rayonnement incident sur la surface 7' qui de nouveau en absorbe la plus grande partie. Ainsi au bout de plusieurs réflexions entre les surfaces 6' et 7' la totalité de l'énergie $I_3$ est absorbée par le corps 7 et transmise par conduction et convection au fluide caloporteur circulant sous ce corps 7.

Ce fluide caloporteur en s'échauffant va émettre des rayonnements infra-rouges en direction de l'absorbeur. Ces rayonnements représentés par la flèche C vont traverser les différentes couches du corps 7 mais étant de grande longueur d'onde, ils sont réfléchis en totalité par la surface interne 6' du corps 6, de sorte que cette dernière constitue un barrage thermique pour les calories provenant du fluide caloporteur.

ORIGINAL

## REVENDICATIONS

1 - Procédé de revêtement permettant d'obtenir un substrat métallique multicouches absorbeur de l'énergie solaire, caractérisé par le fait qu'il consiste à disposer une interface réfléchissante entre deux couches successives de métal, la première couche de métal déposé étant plus perméable aux rayonnements infra-rouges que la couche de métal venant la recouvrir.

2 - Procédé de revêtement selon la revendication 1, caractérisé par le fait que les dépôts de métal s'obtiennent par électrolyse.

3 - Procédé de revêtement selon les revendications 1 et 2, caractérisé par le fait que l'interface réfléchissante s'obtient par l'adjonction d'un agent niveleur dans l'électrolyte de chacun des deux métaux.

4 - Procédé de revêtement selon les revendications 1, 2 et 3, caractérisé par le fait que l'on prépare le substrat de base pour recevoir les deux couches successives de métal par un dépôt électrolytique d'un Nickel d'accrochage sur une face dudit substrat.

5 - Procédé de revêtement selon les revendications 1, 2, 3 et 4 prises ensemble, caractérisé par le fait que la dernière couche de métal est oxydée superficiellement.

6 - Substrat métallique multicouches réalisé selon le procédé des revendications 1, 2, 3, 4 et 5 prises ensemble, caractérisé par le fait qu'il comprend au moins :

 - un substrat de base,

 - une couche de Nickel d'accrochage,

 - une couche de métal nivelé,

 - une couche de métal moins perméable aux rayonnements infra-rouges que le métal précédent,

 - une couche d'oxyde de ce dernier métal ou une couche d'un autre métal absorbant facilement les radiations solaires.

7 - Substrat métallique selon la revendication 6, caractérisé par le fait que ledit substrat de base est en acier inoxydable.

8 - Substrat métallique selon les revendications 6 et 7, caractérisé par le fait que ladite couche de métal nivelé est constituée par un dépôt électrolytique de Nickel nivelant.

9 - Substrat métallique selon les revendications 6, 7 et 8, caractérisé par le fait que la couche de métal moins perméable aux rayonnements infra-rouges est constituée par un dépôt de Cadmium nivelé.

10 - Substrat métallique selon les revendications 6, 7 et 8, caractérisé par le fait que la couche de métal moins perméable aux rayonnements infra-rouges est constituée par un dépôt de Zinc nivelé.

11 - Substrat métallique selon l'ensemble des revendications 6, 7, 8 et 9 ou 10, caractérisé par le fait que la couche absorbant facilement les radiations solaires est constituée par un dépôt de Nickel noir.

12 - Substrat métallique selon les revendications 6, 7, 8 et 9 prises ensemble, caractérisé par le fait que la couche absorbant facilement les radiations solaires est constituée par un oxyde de Cadmium.

13 - Substrat métallique selon les revendications 6, 7, 8 et 10, caractérisé par le fait que la couche absorbant facilement les radiations solaires est constituée par un oxyde de Zinc.

**Fig. I**

Fig. 2